# EUROPÄISCHE PATENTSCHRIFT

(11) **EP 3 371 841 B1**
(45) Veröffentlichungstag und Bekanntmachung des Hinweises auf die Patenterteilung: **21.08.2019**
(21) Anmeldenummer: 16785496.7
(22) Anmeldetag: 25.10.2016
(51) Int. Cl.: H01M 2/06, H01M 2/02, H01M 10/0525, H01M 2/08

(54) **DICHTSYSTEM FÜR POLDURCHFÜHRUNG**
SEALING SYSTEM FOR A TERMINAL FEED-THROUGH
DISPOSITIF D'ÉTANCHÉITE POUR TRAVERSÉE DE BORNE

(30) Priorität: 03.11.2015 DE 102015221555
(43) Veröffentlichungstag der Anmeldung: 12.09.2018
(73) Patentinhaber: VW Kraftwerk GmbH, 38440 Wolfsburg (DE); VARTA Microbattery GmbH, 73479 Ellwangen Jagst (DE)
(72) Erfinder: HUTH, Andreas, 38159 Vechelde (DE); HOLL, Konrad, 73434 Aalen (DE); GAUGLER, Andreas, 73479 Ellwangen (DE); FRICK, Achim, 73431 Aalen (DE); ALDINGER, Steffen, 71336 Waiblingen (DE)
(74) Vertreter: Patentanwaltskanzlei Cartagena
(86) Internationale Anmeldenummer: PCT/EP2016/075677
(87) Internationale Veröffentlichungsnummer: WO 2017/076699

(56) Entgegenhaltungen:
- EP-A1- 2 620 993
- DE-A1-102008 034 872
- JP-A- 2009 134 985
- US-A- 5 518 837

## Beschreibung

Die nachfolgend beschriebene Erfindung betrifft eine Poldurchführung, eine Batterie mit einer Poldurchführung und ein Verfahren zur Herstellung einer solchen Batterie.

Der Begriff "Batterie" meinte ursprünglich mehrere in Serie geschaltete elektrochemische Zellen. Heute werden jedoch auch einzelne elektrochemische Zellen (Einzelzellen) häufig als Batterie bezeichnet. Bei der Entladung einer elektrochemischen Zelle findet eine energieliefernde chemische Reaktion statt, welche sich aus zwei elektrisch miteinander gekoppelten, aber räumlich voneinander getrennten Teilreaktionen zusammensetzt. An der negativen Elektrode werden in einem Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt zu einem der Elektrodenreaktion entsprechenden lonenstrom innerhalb der Zelle. Dieser lonenstrom wird durch einen Ionen leitenden Elektrolyten gewährleistet. In sekundären Zellen und Batterien ist diese Entladereaktion reversibel, es besteht also die Möglichkeit, die bei der Entladung erfolgte Umwandlung chemischer Energie in elektrische umzukehren.

Unter den bekannten sekundären Batterien werden vergleichsweise hohe Energiedichten insbesondere von Lithium-Ionen-Batterien erreicht, also von Batterien, bei denen bei Lade- und Entladeprozessen Lithium-Ionen von einer Elektrode zur anderen wandern. Derartige Batterien eignen sich für den Einsatz in portablen Geräten wie Mobiltelefonen und Notebooks. Weiterhin sind sie aber insbesondere auch als Energiequelle für Kraftfahrzeuge interessant.

Lithium-Ionen-Batterien für Kraftfahrzeuge weisen häufig ein prismatisches Metallgehäuse auf. Üblicherweise setzt sich das Gehäuse aus einem Behältnis mit einem rechteckigen Boden und vier im rechten Winkel dazu angeordneten Seitenwänden sowie einem Deckel, der im Wesentlichen die gleiche Form und Größe wie der Boden aufweist, zusammen. Der Deckel ist in aller Regel kaum profiliert und kann als näherungsweise eben bezeichnet werden. Meist wird das Gehäuse verschlossen, indem die Ränder des Deckels mit dem Öffnungsrand des Behältnisses verschweißt werden.

In dem Metallgehäuse ist in der Regel mindestens eine Einzelzelle angeordnet. Diese kann in Form eines Zellenstapels (stack) aus mehreren flachen Einzelzellen vorliegen als auch in Form einer oder mehrerer gewickelter Einzelzellen (coil).

Fester Bestandteil einer Batterie sind in aller Regel ein positiver und ein negativer Polbolzen, die durch den Deckel, den Boden oder durch eine Wand des Gehäuses geführt und vom Gehäuse mittels eines elektrischen Isolators elektrisch isoliert sind. Den Bereich eines Batteriegehäuses mit einem durch die Wand geführten Polbolzen einschließlich des elektrischen Isolators bezeichnet man gemeinhin als Poldurchführung. Positive Polbolzen sind mit der oder den positiven Elektroden der mindestens einen Einzelzelle elektrisch verbunden. Negative Polbolzen sind mit der oder den negativen Elektroden der mindestens einen Einzelzelle elektrisch verbunden. In aller Regel weist eine erfindungsgemäße Batterie sowohl einen positiven als auch einen negativen Polbolzen auf. Es ist allerdings auch möglich, dass das Gehäuse selbst als positiver oder negativer Pol dient. In diesem Fall kann eine erfindungsgemäße Batterie auch nur einen positiven Polbolzen oder nur einen negativen Polbolzen aufweisen.

Von großer Bedeutung ist die Abdichtung des Gehäuses im Bereich der durch die Wand geführten Polbolzen. Zum Abdichten sind beispielsweise die in der DE 100 47 206 A1 beschriebenen Glasmassen geeignet, die gleichzeitig auch die Funktion des elektrischen Isolators wahrnehmen. Weiterhin sind insbesondere auch polymerbasierte Dichtsysteme geeignet.

Die Anforderungen an ein Dichtsystem für eine Poldurchführung sind sehr hoch. Neben einem hervorragenden Isolations- und Dichtverhalten sind vor allem auch die folgenden weiteren Eigenschaften von Bedeutung:
- dauerhafte mechanische Stabilität bei äußerer Krafteinwirkung auf die Polbolzen,
- thermische Stabilität im Bereich zwischen -40 °C und +100 °C,
- Temperaturwechselbeständigkeit,
- chemische Beständigkeit gegen diverse Elektrolytsysteme.

In aller Regel sollten Dichtsysteme für Poldurchführungen eine Lebensdauer von mindestens 15 Jahren aufweisen. Bei den genannten aus dem Stand der Technik bekannten Dichtsystemen ist dies nicht immer gegeben. Kunststoffbasierte Dichtmaterialien verspröden in Folge langzeitiger mechanischer und chemischer Belastung und neigen in Folge dessen zu Spannungsrissen und zu einem Dichtungsversagen. Glasbasierte Dichtungsmaterialien weisen häufig eine geringe Elastizität und damit eine geringe Toleranz gegenüber mechanischen Momentbelastungen auf. Plötzliche Krafteinwirkungen können leicht zu Rissen und in der Folge ebenfalls zu einem Dichtungsversagen führen.

Aus der US 5518837 A ist eine Batterie mit einem durch ihr Gehäuse geführten Polbolzen bekannt, welcher zwei komprimierbare Dichtungen umfasst, die um eine keramische Isolierbuchse angeordnet sind. Die Dichtungen sowie die Isolierbuchse sind ringförmig ausgebildet und umschließen den innerhalb des Gehäuses befindlichen Teil des Polbolzens. Außerhalb des Gehäuses wird der Polbolzen von einer zweiten ringförmigen Keramikbuchse umschlossen. Die Dichtungen müssen bis 400 °C variabel belastbar sein.

Aus der EP 2620993 A1 und der JP 2009-134985 A sind jeweils Poldurchführungen mit drei Dichtungselementen bekannt, die allesamt aus einem Polymermaterial gefertigt sind und somit elastische Eigenschaften aufweisen.

Aus der DE 102008034872 A1 ist eine Poldurchführung bekannt, bei der ein polymerer Dichtring unmittelbar an der Außenseite eines Polbolzens anliegt.

Der vorliegenden Erfindung lag die Aufgabe zugrunde, Batterien bereitzustellen, die sich durch Poldurchführungen auszeichnen, die den genannten Erfordernissen besser gerecht werden als aus dem Stand der Technik bekannte Lösungen.

Diese Aufgabe wird gelöst durch die Batterie mit den Merkmalen des Anspruchs 1, die Poldurchführung mit den Merkmalen des Anspruchs 6 und das Verfahren mit den Merkmalen des Anspruchs 8. Bevorzugte Ausführungsformen der erfindungsgemäßen Batterie sind in den abhängigen Ansprüchen 2 bis 5 angegeben. Eine bevorzugte Ausführungsform der erfindungsgemäßen Poldurchführung ist im abhängigen Anspruch 7 definiert. Eine bevorzugte Ausführungsform des erfindungsgemäßen Verfahrens findet sich im abhängigen Anspruch 9.

Die erfindungsgemäße Batterie weist ein Gehäuse auf sowie in einem oder in dem Innenraum des Gehäuses mindestens eine Einzelzelle mit mindestens einer positiven und mindestens einer negativen Elektrode. Bei der Einzelzelle handelt es sich bevorzugt um eine Zelle auf Lithium-lonen-Basis. Entsprechend ist die erfindungsgemäße Batterie bevorzugt eine Lithium-Ionen-Batterie.

Die Einzelzelle liegt bevorzugt in Form eines Verbundes aus Elektroden- und Separatorfolien mit der Sequenz positive Elektrode / Separator / negative Elektrode vor. Bevorzugt umfassen die Elektroden dabei metallische Stromkollektoren, die meist in Form von zwei- oder dreidimensionalen Flächengebilden vorliegen. Bei Lithium-Ionen-Batterien findet sich etwa auf der Seite der positiven Elektrode bevorzugt ein Netz oder eine Folie aus Aluminium, beispielsweise aus Aluminiumstreckmetall oder aus einer gelochten Aluminiumfolie. Auf der Seite der negativen Elektrode werden als Stromkollektoren meist Netze oder Folien aus Kupfer verwendet. Wie die aus dem Stand der Technik bekannten Batterien kann auch die erfindungsgemäße Batterie sowohl einen Zellenstapel (stack) aus mehreren flachen Einzelzellen enthalten als auch eine oder mehrere gewickelte Einzelzellen (coil).

Das Gehäuse schirmt die mindestens eine Einzelzelle von ihrer Umgebung ab und ist bevorzugt gas- und flüssigkeitsdicht ausgebildet. Wie die aus dem Stand der Technik bekannten Gehäuse weist es in der Regel eine prismatische Form auf und setzt sich aus einem Behältnis mit einem rechteckigen Boden und vier im rechten Winkel dazu angeordneten Seitenwänden sowie einem Deckel, der im Wesentlichen die gleiche Form und Größe wie der Boden aufweist, zusammen. Wenn das Gehäuse geschlossen ist, weist es in dieser Ausführungsform mit den vier Seitenwänden und dem Boden und dem Deckel insgesamt sechs Gehäuseaußenwände auf. Besonders bevorzugt besteht es aus einem Metall, insbesondere aus Aluminium oder aus einer Aluminiumlegierung.

Fester Bestandteil einer erfindungsgemäßen Batterie ist ein elektrisch leitender Polbolzen, der entweder mit der mindestens einen positiven oder mit der mindestens einen negativen Elektrode verbunden ist. Bevorzugt weist die Batterie sowohl einen elektrisch mit der mindestens einen positiven Elektrode verbundenen positiven Polbolzen auf als auch einen elektrisch mit der mindestens einen negativen Elektrode verbundenen negativen Polbolzen.

Das Gehäuse einer erfindungsgemäßen Batterie weist mindestens eine Gehäuseaußenwand auf, die mindestens eine von einem umlaufenden Öffnungsrand definierte Durchbrechung aufweist. Bei der Gehäuseaußenwand mit der mindestens einen Durchbrechung handelt es sich bevorzugt um den Boden oder den Deckel des Gehäuses.

Der elektrisch leitende Polbolzen weist einen Schaft auf, der durch die Durchbrechung geführt ist. Weiterhin umfasst er mindestens ein auf dem Schaft sitzendes Klemmelement, das die Durchbrechung überdeckt und zusammen mit der Gehäuseaußenwand einen ringförmigen Spalt bildet bzw. einschließt. Bevorzugt weist die erfindungsgemäße Batterie einen Polbolzen mit zwei der genannten Klemmelemente auf. Primäre Aufgabe der beiden Klemmelemente ist es, den Schaft des Polbolzens in der Durchbrechung in der Gehäuseaußenwand zu fixieren und ein Durchrutschen des Polbolzens zu verhindern. Im montierten Zustand können die Klemmelemente eine Klemmwirkung auf zwischen ihnen angeordnete Bauteile ausüben.

In einfachen Ausführungsformen kann der Polbolzen beispielsweise als Schaft einen Stift mit einem Außengewinde und zwei auf dem Stift sitzende, gegeneinander verdrehbar angeordneten Muttern als Klemmelemente umfassen. Bevorzugt ist der Polbolzen jedoch schraubenartig ausgebildet. Bei dem mindestens einen Klemmelement handelt es sich dann bevorzugt um den Kopf eines solchen schraubenförmigen Polbolzens und um eine Mutter, mit welcher der schraubenförmige Polbolzen gekontert ist.

Bestandteil der erfindungsgemäßen Batterie sind mindestens ein elektrisch isolierendes Stützelement und mindestens ein Dichtungselement. Kombiniert bilden diese ein Dichtsystem für eine Poldurchführung.

Das elektrisch isolierende Stützelement ist bevorzugt ringförmig ausgebildet und umschließt den Schaft des Polbolzens manschettenartig. Das Stützelement weist eine nach innen in Richtung des umschlossenen Schafts weisende Kontaktfläche und eine nach außen weisende Kontaktfläche auf. Die nach innen weisende Kontaktfläche steht bevorzugt in unmittelbarem Kontakt mit dem Schaft. Die nach außen weisende Kontaktfläche steht in unmittelbarem Kontakt mit dem Öffnungsrand der Durchbrechung. Umgekehrt liegt der Öffnungsrand der Durchbrechung unmittelbar an der nach außen weisenden Kontaktfläche des Stützelements an. Mit anderen Worten, der Polbolzen kann sich über das Stützelement auf den Gehäuserand stützen.

Besonders bevorzugt steht die nach außen weisende Kontaktfläche des Stützelements nicht nur in unmittelbarem Kontakt mit dem Öffnungsrand der Durchbrechung, bevorzugt begrenzt die nach außen weisende Kontaktfläche des Stützelements gleichzeitig den durch das Klemmelement und die Gehäuseaußenwand gebildeten ringförmigen Spalt nach innen, insbesondere derart, dass innerhalb des Spalts ein unmittelbarer Kontakt anderer Komponenten der Poldurchführung, beispielsweise des mindestens einen Dichtungselements, mit dem Polbolzen ausgeschlossen ist.

Das Dichtungselement ist bevorzugt in dem Spalt zwischen dem Klemmelement und der Gehäuseaußenwand angeordnet, und zwar bevorzugt in einer konzentrischen Anordnung um das Stützelement herum. In bevorzugten Ausführungsformen füllt es den Spalt vollständig aus. Der unmittelbare Kontaktbereich zwischen dem Öffnungsrand der Durchbrechung und dem Schaft des Polbolzens ist jedoch bevorzugt frei von Dichtungsmaterial. Dieser Kontaktbereich wird von dem Stützelement eingenommen.

Mechanische Belastungen, die auf den Schaft des Polbolzens oder auf die Gehäuseaußenwand wirken, können vom Stützelement aufgenommen werden und wirken nicht auf das Dichtungselement. Das Dichtsystem aus dem Stützelement und dem Dichtungselement gewährleistet, dass sowohl axial als auch radial auf den Polbolzen wirkende mechanische Kräfte unmittelbar lediglich das Stützelement tangieren. Das Dichtungselement wird hingegen frei von mechanischen Belastungen gehalten, was seine Lebensdauer deutlich erhöhen kann.

Bei dem Dichtungselement handelt es sich besonders bevorzugt nicht etwa um ein vorgefertigtes Bauteil, das mit dem Stützelement und weiteren Bauteilen zu einer Poldurchführung zusammengesetzt werden kann. Es ist vielmehr bevorzugt, das Dichtungsbauteil in unmittelbarem Kontakt mit einigen der genannten Komponenten, insbesondere in unmittelbarem und gleichzeitigem Kontakt mit dem Klemmelement und der Gehäuseaußenwand sowie gegebenenfalls mit der nach außen weisenden Kontaktfläche des Stützteils, herzustellen. Oder mit anderen Worten, bevorzugt wird das Dichtungselement unmittelbar in dem Spalt gebildet.

Besonders bevorzugt wird das Dichtungselement durch Spritzguss hergestellt, und zwar bevorzugt unmittelbar in dem Spalt.

In besonders bevorzugten Ausführungsformen weist das Stützelement eine Ringnut auf, in der der Öffnungsrand der Durchbrechung eingefasst ist. Die Ringnut ist bevorzugt auf der nach außen weisenden Kontaktfläche des Stützelements angeordnet oder die Ringnut bildet die nach außen weisende Kontaktfläche des elektrisch isolierenden Stützelements oder zumindest einen Teil derselben. Besonders bevorzugt ist der Öffnungsrand der Durchbrechung derart in der Ringnut festgelegt, dass sich ein Formschluss in axialer Richtung ergibt.

Bevorzugt handelt es sich bei dem Stützelement um einen Stützring, insbesondere um einen Stützring, der aus zwei ringförmigen Halbteilen zusammengesetzt ist. Dies gilt insbesondere dann, wenn der erwähnte Formschluss realisiert ist.

Das Stützelement besteht aus einem Glas, einer Keramik, einer Glaskeramik oder einem Glas- oder keramikbasierten Kompositmaterial.

Das Dichtungselement besteht aus einem Kunststoff. Geeignete Kunststoffe sind beispielsweise Polyamid, Polyetherketon, Polyetheretherketon und Polysulfon.

Der Polbolzen einschließlich des Schafts und gegebenenfalls des und/oder der Klemmelement(e) besteht bevorzugt aus Metall. Als bevorzugtes Metall ist insbesondere Kupfer zu nennen.

Die erfindungsgemäße Poldurchführung umfasst bevorzugt mindestens drei Komponenten, nämlich
- ein Gehäuseblech, das einen umlaufenden Außenrand und eine Durchbrechung mit einem umlaufenden Öffnungsrand aufweist,
- einen elektrisch leitenden Polbolzen mit einem durch die Durchbrechung geführten Schaft sowie mindestens einem auf dem Schaft sitzenden, die Durchbrechung überdeckenden und mit dem Gehäuseblech einen Spalt bildenden Klemmelement und
- ein elektrisch isolierendes Stützelement, das den Schaft des Polbolzens manschettenartig umschließt und das eine nach außen weisende, umlaufende Kontaktfläche aufweist, an welcher der Öffnungsrand der Durchbrechung unmittelbar anliegt.

Die Poldurchführung dient insbesondere zur Herstellung erfindungsgemäßer Batterien. Hierfür geeignete Polbolzen und Stützelemente wurden bereits hinreichend beschrieben. Einer näheren Erläuterung bedarf es somit nur noch hinsichtlich des Gehäuseblechs. Bei diesem Gehäuseblech kann es sich grundsätzlich bereits um eine komplette Gehäuseaußenwand des Gehäuses der erfindungsgemäßen Batterie handeln, beispielsweise um den Deckel oder den Boden der Batterie. Besonders bevorzugt handelt es sich bei dem Gehäuseblech jedoch lediglich um einen Teilbereich einer Gehäuseaußenwand. Besonders bevorzugt ist das Gehäuseblech als kreisrunde Scheibe oder rechteckig ausgebildet. Das Gehäuseblech besteht bevorzugt aus dem gleichen Material wie das oben beschriebene Gehäuse der erfindungsgemäßen Batterie.

In besonders bevorzugten Ausführungsformen umfasst die Poldurchführung das oben beschriebene Dichtungselement, das konzentrisch um das Stützelement herum in den Spalt zwischen dem Klemmelement und der Gehäuseaußenwand angeordnet ist.

Die Poldurchführung kann insbesondere im Rahmen des erfindungsgemäßen Verfahrens zu der oben beschriebenen Batterie verbaut werden. Das Verfahren umfasst bevorzugt die folgenden Schritte:
- es wird eine Poldurchführung umfassend das beschriebene Gehäuseblech, den elektrisch leitenden Polbolzen und das elektrisch isolierende Stützelement bereitgestellt,
- es wird zwecks Bildung eines Dichtungselements eine fließfähige Polymermasse in den Spalt zwischen dem Gehäuseblech und dem Klemmelement eingespritzt,
- in einem weiteren möglichen Schritt wird eine Gehäuseaußenwand, beispielsweise ein Deckel, mit einer durch einen Öffnungsrand definierten Durchbrechung bereitgestellt,
- in einem weiteren möglichen Schritt wird die Poldurchführung in die Durchbrechung in der Gehäuseaußenwand eingesetzt und das Gehäuseblech mit der Gehäusewand verschweißt wird.

Es ist bevorzugt, dass das Gehäuseblech der Poldurchführung eine Größe und eine Form aufweist, die im Wesentlichen der Größe und der Form der Durchbrechung in der bereitgestellten Gehäuseaußenwand entspricht. Zum Verschließen der Durchbrechung in der Gehäuseaußenwand ist es dann möglich, die Poldurchführung so in die Durchbrechung einzusetzen, dass der umlaufende Außenrand des Gehäuseblechs mit dem Öffnungsrand der Durchbrechung in der Gehäuseaußenwand verschweißt werden kann.

Weitere Merkmale der Erfindung sowie aus der Erfindung resultierende Vorteile ergeben sich aus der nachfolgenden Beschreibung der Zeichnungen, anhand derer die Erfindung illustriert wird. Die nachfolgend beschriebenen Ausführungsformen dienen lediglich zur Erläuterung und zum besseren Verständnis der Erfindung und sind in keiner Weise einschränkend zu verstehen.

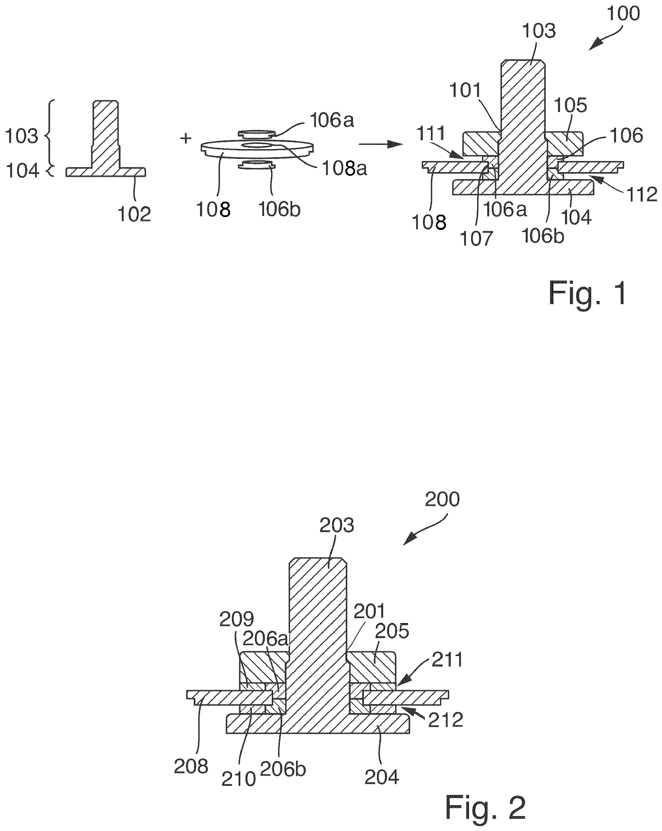

Fig. 1 zeigt schematisch die Komponenten einer bevorzugten Ausführungsform der erfindungsgemäßen Poldurchführung 100 in montiertem (rechts, Querschnittsdarstellung) und teilweise auch in unmontiertem Zustand (links). Der Polbolzen 101 umfasst mehrere Teile, nämlich eine Polschraube 102 bestehend aus dem Schaft 103 und dem Schraubenkopf 104 sowie aus der Mutter 105 (nicht unmontiert dargestellt). Der Schraubenkopf 104 und die Mutter 105 fungieren als Klemmelemente. Der Schaft 103 weist auf seiner Außenseite ein Außengewinde (nicht dargestellt) auf. Die Mutter 105 weist ein (ebenfalls nicht dargestelltes) Innengewinde auf, das mit dem Außengewinde des Schaftes 103 zusammenwirken kann. Ein elektrisch isolierendes ringförmiges Stützelement 106 umschließt den Schaft 103 manschettenartig. Es setzt sich aus zwei ringförmigen Halbteilen 106a und 106b zusammen. Auf seiner Außenseite weist das Stützelement eine umlaufende Ringnut 107 auf.

Die Poldurchführung umfasst weiterhin ein Gehäuseblech 108 in Form einer kreisrunden Scheibe, das mittig eine durch einen umlaufenden Öffnungsrand 108a definierte Durchbrechung aufweist. Im montiertem Zustand (rechts) ist dieser Öffnungsrand 108a in der Ringnut 107 derart festgelegt, dass sich ein Formschluss in axialer Richtung ergibt. Der Schaft 103 des Polbolzens und das den Schaft manschettenartig umschließende Stützelement 106 verschließen die vom Öffnungsrand 108a definierte Durchbrechung. Weiterhin überdecken im montierten Zustand sowohl die Mutter 105 als auch der Schraubenkopf 104 die durch den umlaufenden Öffnungsrand 108a definierte Durchbrechung im Gehäuseblech 108.

Das Klemmelement 105 und das Gehäuseblech 108 schließen einen ringförmigen Spalt 111 ein. Das Klemmelement 104 und das Gehäuseblech 108 schließen einen ringförmigen Spalt 112 ein. Der Spalt 110 und der Spalt 111 werden nach innen jeweils durch das Stützelement 106 begrenzt.

In Fig. 2 ist eine Poldurchführung 200 dargestellt (Querschnittsdarstellung), die sich von der in Fig. 1 dargestellten Poldurchführung 100 dadurch unterscheidet, dass sie zusätzlich zwei Dichtungselemente 209 und 210 aufweist. Zwischen dem Schraubenkopf 204 und dem Gehäuseblech 208 auf der einen Seite und der Mutter 205 und dem Gehäuseblech 208 auf der anderen Seite befinden sich die ringförmigen Spalte 211 und 212. Diese sind mit den Dichtungselementen 209 und 210 befüllt. Zur Herstellung der Dichtungselemente wurden jeweils fließfähige Polymermassen durch Spritzguss in die Spalte 211 und 212 eingebracht und dort ausgehärtet.

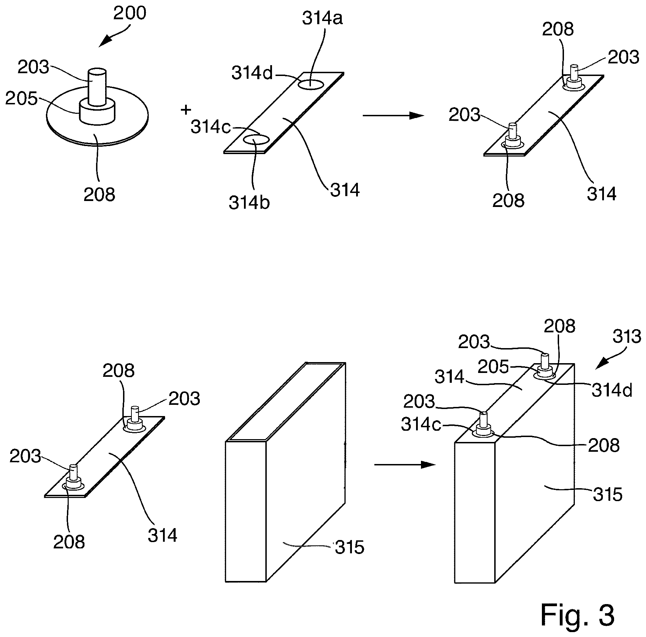

Fig. 3 illustriert schematisch die Verarbeitung der in Fig. 2 dargestellten Poldurchführung 200 zu einer erfindungsgemäßen Batterie 313.

Hierzu wird ein Gehäusedeckel 314 bereitgestellt, der zwei kreisrunde Durchbrechungen 314a und 314b aufweist. Die Durchbrechung 314a ist durch den Öffnungsrand 314d definiert. Die Durchbrechung 314b ist durch den Öffnungsrand 314c definiert. Der Durchmesser der kreisrunden Durchbrechungen 314a und 314b ist derart bemessen, dass sich eine Poldurchführung 200 in jede der Durchbrechungen einsetzen lässt, so dass die Ränder der Gehäusebleche 208 mit den Öffnungsrändern 314c und 314 d verschweißt werden können. Die Gehäusebleche 208 bilden damit einen Teil des Gehäusedeckels 314 und damit einen Teil einer Gehäuseaußenwand. Von der Poldurchführung 200 (Draufsicht schräg von oben) sind der besseren Übersicht halber lediglich die Bestandteile 203, 205 und 208 dargestellt.

In einem nächsten Schritt kann dann ein prismatisches Behältnis 315 mit einem rechteckigen Boden und vier im rechten Winkel dazu angeordneten Seitenwänden bereitgestellt werden, in das bereits mindestens eine Einzelzelle mit mindestens einer positiven und mindestens einer negativen Elektrode (nicht dargestellt) eingeschoben ist. Nach einem Verbinden der Polbolzen mit den Elektroden der Einzelzelle wird der Gehäusedeckel 314 auf das Behältnis 315 aufgesetzt und mit diesem durch Verschweißung verbunden.

## Patentansprüche

1. Batterie (313) mit den folgenden Merkmalen:
- Sie umfasst ein metallisches Gehäuse, das eine Gehäuseaußenwand (314) mit einer von einem umlaufenden Öffnungsrand (108a) definierten Durchbrechung aufweist,
- sie umfasst mindestens eine Einzelzelle mit mindestens einer positiven und mindestens einer negativen Elektrode, die in einem Innenraum innerhalb des Gehäuses angeordnet ist,
- sie umfasst einen elektrisch leitenden Polbolzen (101; 201), der mit der mindestens einen positiven oder mit der mindestens einen negativen Elektrode verbunden ist und der einen durch die Durchbrechung geführten Schaft (103; 203) sowie mindestens ein auf dem Schaft sitzendes, die Durchbrechung überdeckendes und mit der Gehäuseaußenwand einen ringförmigen Spalt (111, 112; 211, 212) bildendes Klemmelement (104, 105; 204, 205) umfasst,
- sie umfasst ein elektrisch isolierendes und ringförmiges Stützelement (106; 206), das den Schaft des Polbolzens manschettenartig umschließt und das eine nach außen weisende, umlaufende Kontaktfläche aufweist, an der der Öffnungsrand 108a der Durchbrechung anliegt,
- sie umfasst ein Dichtungselement (209; 210), das konzentrisch um das Stützelement (106; 206) herum in dem Spalt (111, 112; 211, 212) zwischen dem Klemmelement (104, 105; 204, 205) und der Gehäuseaußenwand (314) angeordnet ist
- wobei das Dichtungselement (209; 210) aus einem Kunststoff besteht und das Stützelement aus einem Glas oder aus einer Keramik oder einem glas- oder keramikbasierten Kompositmaterial besteht und
- die nach außen weisende, umlaufende Kontaktfläche unmittelbar an dem Öffnungsrand (108a) anliegt und den durch das Klemmelement und die Gehäuseaußenwand gebildeten ringförmigen Spalt nach innen derart begrenzt, dass ein unmittelbarer Kontakt des Dichtungselements mit dem Polbolzen ausgeschlossen ist.

2. Batterie nach Anspruch 1, **dadurch gekennzeichnet, dass** das Dichtungselement (209; 210) in dem Spalt (111, 112; 211, 212) und/oder durch Spritzguss gebildet ist.

3. Batterie nach einem der Ansprüche 1 oder 2, **dadurch gekennzeichnet, dass** das Stützelement eine Ringnut (107) aufweist, in die der Öffnungsrand (108a) der Durchbrechung eingefasst ist.

4. Batterie nach einem der vorhergehenden Ansprüche, **dadurch gekennzeichnet, dass** das Stützelement (106; 206) aus zwei ringförmigen Halbteilen (106a, 106b; 206a, 206b) zusammengesetzt ist.

5. Batterie nach einem der vorhergehenden Ansprüche, **dadurch gekennzeichnet, dass** der Polbolzen (101; 201) aus Metall besteht.

6. Poldurchführung (100; 200) zur Herstellung einer Batterie (313) nach einem der vorhergehenden Ansprüche, umfassend
- ein Gehäuseblech (108; 208), das einen umlaufenden Außenrand und eine Durchbrechung mit einem umlaufenden Öffnungsrand 108a aufweist,
- einen elektrisch leitenden Polbolzen (101; 201) mit einem durch die Durchbrechung geführten Schaft (103; 203) sowie mindestens einem auf dem Schaft sitzenden, die Durchbrechung überdeckenden und mit dem Gehäuseblech einen ringförmigen Spalt (111, 112; 211, 212) bildenden Klemmelement (104, 105; 204, 205),
- ein elektrisch isolierendes und ringförmiges Stützelement (106; 206) aus einem Glas oder aus einer Keramik oder einem glas- oder keramikbasierten Kompositmaterial, das den Schaft (103; 203) des Polbolzens manschettenartig umschließt und das eine nach außen weisende, umlaufende Kontaktfläche aufweist, an welcher der Öffnungsrand (108a) der Durchbrechung unmittelbar anliegt.

7. Poldurchführung nach Anspruch 6, **dadurch gekennzeichnet, dass** sie ein Dichtungselement (209; 210) umfasst, das konzentrisch um das Stützelement (106; 206) herum in dem Spalt (111, 112; 211, 212) zwischen dem Klemmelement (104, 105; 204, 205) und dem Gehäuseblech (208) angeordnet ist.

8. Verfahren zur Herstellung einer Batterie, insbesondere einer Batterie gemäß einem der Ansprüche 1 bis 5, mit den Schritten
- Bereitstellen einer Poldurchführung (100; 200) gemäß Anspruch 6, und
- Einspritzen einer fließfähigen Polymermasse in den Spalt (111, 112; 211, 212) zwischen dem Gehäuseblech (108; 208) und dem Klemmelement zwecks Bildung eines Dichtungselements in dem Spalt.

9. Verfahren nach Anspruch 8, zusätzlich umfassend die Schritte
- Bereitstellen einer Gehäusewand mit einer Durchbrechung (314a, 314b), und
- Verschließen der Durchbrechung (314a, 314b) durch Einsetzen der Poldurchführung (100; 200) in die Durchbrechung und Verschweißen des Gehäuseblechs (108; 208) mit der Gehäusewand.

## Claims

1. Battery (313) having the following features:
- it comprises a metal housing, which has a housing outer wall (314) having a through-hole defined by a peripheral opening edge (108a),
- it comprises at least one individual cell having at least one positive electrode and at least one negative electrode, arranged in an interior of the housing,
- it comprises an electrically conductive terminal stud (101; 201), which is connected to the at least one positive electrode or to the at least one negative electrode, comprising a shaft (103; 203) which is fed through the through-hole, and at least one clamping element (104, 105; 204, 205) which sits on the shaft and covers the through-hole, and forms an annular gap (111, 112; 211, 212) together with the housing outer wall,
- it comprises an electrically insulating and annular support element (106; 206), which surrounds the shaft of the terminal stud in a sleeve-like manner, and having an outward-facing peripheral contact surface, against which the opening edge 108a of the through-hole lies,
- it comprises a sealing element (209; 210), which is arranged concentrically around the support element (106; 206) in the gap (111, 112; 211, 212) between the clamping element (104, 105; 204, 205) and the housing outer wall (314),
- wherein the sealing element (209; 210) is comprised of a plastic and the support element is comprised of a glass or a ceramic, or of a glass- or ceramic-based composite material and
- the outward-facing peripheral contact surface lies directly on the opening edge (108a) and delimits the annular gap formed by the clamping element and the housing outer wall to the interior such that direct contact of the sealing element with the terminal stud is excluded.

2. Battery according to Claim 1, **characterized in that** the sealing element (209; 210) is formed in the gap (111, 112; 211, 212) and/or by injection-molding.

3. Battery according to one of Claims 1 or 2, **characterized in that** the support element incorporates an annular groove (107), in which the opening edge (108a) of the through-hole is accommodated.

4. Battery according to one of the preceding claims, **characterized in that** the support element (106; 206) is comprised of two annular half-sections (106a, 106b; 206a, 206b).

5. Battery according to one of the preceding claims, **characterized in that** the terminal stud (101; 201) is comprised of metal.

6. Terminal feed-through (100; 200) for producing a battery (313) according to one of the preceding claims, comprising:
- a housing panel (108; 208), having a peripheral outer edge and a through-hole with a peripheral opening edge (108a),
- an electrically conductive terminal stud (101; 201), having a shaft (103; 203) which is fed through the through-hole, and at least one clamping element (104, 105; 204, 205) which sits on the shaft, covers the through-hole and, in combination with the housing panel, forms an annular gap (111, 112; 211, 212),
- an electrically insulating and annular support element (106; 206) made of a glass or of a ceramic, or of a glass- or ceramic-based composite material, which surrounds the shaft (103; 203) of the terminal stud in a sleeve-like manner, and having an outward-facing peripheral contact surface, against which the opening edge (108a) of the through-hole lies directly.

7. Terminal feed-through according to Claim 6, **characterized in that** it comprises a sealing element (209; 210) which is arranged concentrically around the support element (106; 206) in the gap (111, 112; 211, 212) between the clamping element (104, 105; 204, 205) and the housing panel (208).

8. Method for producing a battery, specifically a battery according to one of Claims 1 to 5, comprising the following steps:
- provision of a terminal feed-through (100; 200) according to Claim 6, and
- injection of a liquid polymer compound into the gap (111, 112; 211, 212) between the housing panel (108; 208) and the clamping element, for the formation of a sealing element in the gap.

9. Method according to Claim 8, additionally comprising the following steps:
- provision of a housing wall having a through-hole (314a, 314b), and
- closure of the through-hole (314a, 314b) by the insertion of the terminal feed-through (100; 200) in the through-hole, and the welding of the housing panel (108; 208) with the housing wall.

## Revendications

1. Batterie (313) présentant les caractéristiques suivantes:
- elle comprend un boîtier métallique, qui présente une paroi extérieure de boîtier (314) avec une percée définie par un bord d'ouverture périphérique (108a),
- elle comprend au moins une cellule individuelle avec au moins une électrode positive et au moins une électrode négative, qui est disposée dans un espace intérieur à l'intérieur du boîtier,
- elle comprend un boulon de borne électriquement conducteur (101; 201), qui est relié à ladite au moins une électrode positive ou à ladite au moins une électrode négative et qui comprend une tige (103; 203) guidée à travers la percée ainsi qu'au moins un élément de serrage (104, 105; 204, 205) monté sur la tige, recouvrant la percée et formant avec la paroi extérieure de boîtier une fente annulaire (111, 112; 211, 212),
- elle comprend un élément d'appui (106; 206) électriquement isolant et annulaire, qui entoure à la manière d'une manchette la tige du boulon de borne et qui présente une face de contact périphérique tournée vers l'extérieur, sur laquelle s'applique le bord d'ouverture (108a) de la percée,
- elle comprend un élément d'étanchéité (209; 210), qui est disposé de façon concentrique autour de l'élément d'appui (106; 206) dans la fente (111, 112; 211, 212) entre l'élément d'appui (104, 105; 204, 205) et la paroi extérieure de boîtier (314),
- dans laquelle l'élément d'étanchéité (209; 210) se compose d'une matière plastique et l'élément d'appui se compose d'un verre ou d'une céramique ou d'un matériau composite à base de verre ou bien de céramique, et
- la face de contact périphérique tournée vers l'extérieur s'applique directement sur le bord d'ouverture (108a) et limite vers l'intérieur la fente annulaire formée par l'élément de serrage et la paroi extérieure de boîtier, de telle manière qu'un contact direct de l'élément d'étanchéité avec le boulon de borne soit exclu.

2. Batterie selon la revendication 1, **caractérisée en ce que** l'élément d'étanchéité (209; 210) est formé dans la fente (111, 112; 211, 212) et/ou par moulage par injection.

3. Batterie selon une des revendications 1 ou 2, **caractérisée en ce que** l'élément d'appui présente une rainure annulaire (107), dans laquelle le bord d'ouverture (108a) de la percée est encastré.

4. Batterie selon l'une quelconque des revendications précédentes, **caractérisée en ce que** l'élément d'appui (106; 206) est composé de deux moitiés annulaires (106a, 106b; 206a, 206b).

5. Batterie selon l'une quelconque des revendications précédentes, **caractérisée en ce que** le boulon de borne (101; 201) est constitué de métal.

6. Traversée de borne (100; 200) pour la fabrication d'une batterie (313) selon l'une quelconque des revendications précédentes, comprenant:
- une tôle de boîtier (108; 208), qui présente un bord extérieur périphérique et une percée avec un bord d'ouverture périphérique (108a),
- un boulon de borne électriquement conducteur (101; 201) avec une tige (103; 203) guidée à travers la percée ainsi qu'au moins un élément de serrage (104, 105; 204, 205) monté sur la tige, recouvrant la percée et formant avec la tôle de boîtier une fente périphérique (111, 112; 211, 212),
- un élément d'appui (106; 206) électriquement isolant et annulaire constitué d'un verre ou d'une céramique ou d'un matériau composite à base de verre ou bien de céramique, qui entoure à la manière d'une manchette la tige (103; 203) du boulon de borne et qui présente une face de contact périphérique tournée vers l'extérieur, sur laquelle s'applique directement le bord d'ouverture (108a) de la percée.

7. Traversée de borne selon la revendication 6, **caractérisée en ce qu'**elle comprend un élément d'étanchéité (209; 210), qui est disposé de façon concentrique autour de l'élément d'appui (106; 206) dans la fente (111, 112; 211, 212) entre l'élément de serrage (104, 105; 204, 205) et la tôle de boîtier (208).

8. Procédé de fabrication d'une batterie, en particulier d'une batterie selon l'une quelconque des revendications 1 à 5, comprenant les étapes suivantes:
- préparation d'une traversée de borne (100; 200) selon la revendication 6, et
- injection d'une masse polymère coulante dans la fente (111, 112; 211, 212) entre la tôle de boîtier (108; 208) et l'élément de serrage en vue de la formation d'un élément d'étanchéité dans la fente.

9. Procédé selon la revendication 8, comprenant en outre les étapes suivantes:
- préparer une paroi de boîtier avec une percée (314a, 314b), et
- obturer la percée (314a, 314b) par insertion de la traversée de borne (100; 200) dans la percée et soudage de la tôle de boîtier (108; 208) avec la paroi de boîtier.
